# EUROPEAN PATENT SPECIFICATION

(11) **EP 3 682 964 B1**
(45) Date of publication and mention of the grant of the patent: **18.06.2025**
(21) Application number: 18857259.8
(22) Date of filing: 16.08.2018
(51) Int. Cl.: B01D 71/56, B01D 69/10, B01D 69/12, B01D 67/00, B01D 69/02

(54) **COMPOSITE SEMIPERMEABLE MEMBRANE AND METHOD FOR MANUFACTURING SAME**
SEMIPERMEABLE VERBUNDMEMBRAN UND VERFAHREN ZUR HERSTELLUNG DAVON
MEMBRANE COMPOSITE SEMI-PERMÉABLE ET SON PROCÉDÉ DE FABRICATION

(30) Priority: 15.09.2017 JP 2017177513
(43) Date of publication of application: 22.07.2020
(73) Proprietor: Nitto Denko Corporation, Ibaraki-shi, Osaka 567-8680 (JP)
(72) Inventor: MIYABE,Tomotsugu, Ibaraki-shi Osaka 567-8680 (JP); INOUE,Shinichi, Ibaraki-shi Osaka 567-8680 (JP); OKAZAKI,Yuha, Ibaraki-shi Osaka 567-8680 (JP); OGAWA,Tomoya, Ibaraki-shi Osaka 567-8680 (JP)
(74) Representative: Müller-Boré & Partner Patentanwälte PartG mbB
(86) International application number: PCT/JP2018/030437
(87) International publication number: WO 2019/054119

(56) References cited:
- EP-A1- 0 085 111
- EP-B1- 0 718 029
- WO-A1-2015/114727
- JP-A- 2010 137 192
- JP-A- 2014 233 652
- JP-A- 2016 093 797
- JP-A- H08 224 452
- JP-A- S5 824 303
- JP-A- S63 123 406
- US-A- 4 769 148
- US-A1- 2015 165 387

## Description

### TECHNICAL FIELD

The present invention relates to a composite semipermeable membrane having a skin layer and a porous support supporting the skin layer, and a method for producing the same. The composite semipermeable membrane is suitably used for production of ultrapure water, desalination of brackish water or sea water, etc., and usable for removing or collecting pollution sources or effective substances from pollution, which causes environment pollution occurrence, such as dyeing drainage and electrodeposition paint drainage, leading to contribute to closed system for drainage. Furthermore, the membrane can be used for concentration of active ingredients in foodstuffs usage, for an advanced water treatment, such as removal of harmful component in water purification and sewage usage etc. Moreover, the membrane can be used for waste water treatment in oil fields or shale gas fields.

### BACKGROUND ART

The composite semipermeable membrane is called an RO (reverse osmosis) membrane, an NF (nanofiltration) membrane, or a FO (forward osmosis) membrane, depending on the filtration performance and treatment method of the membrane, and such membrane can be used for the production of ultrapure water, seawater desalination, desalination of brackish water, waste water recycling treatment, or the like.

Examples of a composite semipermeable membrane used industrially include a composite semipermeable membrane in which a skin layer containing a polyamide-based resin obtained by reacting a polyfunctional amine component with a polyfunctional acid halide component is formed on the surface of a porous support.

The composite semipermeable membrane is required to have stable water separating performance. When water containing contaminated materials (for example, sewage) is treated with a composite semipermeable membrane, contaminated materials (for example, microorganisms) are adsorbed on the skin layer surface, and the water permeation capacity tends to gradually decrease. Thus, it is necessary to periodically wash the composite semipermeable membrane. Particularly in recent years, the quality of raw water is diversified in waste water treatment and the like, and the number of times of washing tends to increase.

A solution containing an oxidizing agent is often used for washing the composite semipermeable membrane. However, when the composite semipermeable membrane is washed with a solution containing the oxidizing agent, the composite semipermeable membrane is deteriorated, and there is a problem that water treatment performance greatly varies.

As a composite semipermeable membrane having oxidant resistance (chlorine resistance), for example, a composite semipermeable membrane using piperazine as a polyfunctional amine component is known (Patent Document 1).

However, although the composite semipermeable membrane of Patent Document 1 is excellent in oxidant resistance (chlorine resistance), the composite semipermeable membrane has a problem that the salt rejection rate is low.

In order to solve the problem, Patent Document 2 proposes a technique for bringing an ultrathin membrane, mainly composed of crosslinked polypiperazineamide obtained by an interfacial reaction, into contact with a chlorine-containing aqueous solution having a pH of 1.0 to 10 at normal pressure when a semipermeable composite membrane having a porous support membrane and the ultrathin membrane is produced.

According to the method of Patent Document 2, although a salt rejection property of the composite semipermeable membrane is improved to some extent, this method is not satisfactory, and development of a composite semipermeable membrane having a more excellent salt rejection property has been desired.

WO 2015/114727 A1, JP 2016 093797 A, JP 2014 233652 A , JP 2010 137192 A , US 2015/165387 A1, EP 0 085 111 A1 and EP 0 718 029 B1 disclose composite polyamide membranes.

### PRIOR ART DOCUMENTS

### PATENT DOCUMENTS

Patent Document 1: U.S. patent No. 4769148
Patent Document 2: JP-A-S63-123406

### SUMMARY OF THE INVENTION

### PROBLEMS TO BE SOLVED BY THE INVENTION

The purpose of the present invention is to provide a composite semipermeable membrane, which has excellent oxidant resistance (chlorine resistance) and salt rejection property, and a method for producing the same.

### MEANS FOR SOLVING THE PROBLEMS

The inventors of the invention have made extensive studies to solve the above-mentioned problems, and, as a result, have found that the purpose can be achieved by the following composite semipermeable membrane and the method for producing the same, and have completed the invention.

That is, the present invention relates to a composite semipermeable membrane wherein a skin layer containing a polyamide-based resin obtained by polymerizing a polyfunctional amine component and a polyfunctional acid halide component is formed on a surface of a porous support, wherein
the polyfunctional amine component contains an alicyclic diamine, and
in the skin layer, an absorption peak intensity obtained by a transmission method of FT-IR (Fourier transform infrared spectroscopy) and derived from a C=C stretching vibration of an amide group is 0.06 8.8J or more.

By forming a skin layer using an alicyclic diamine as a polyfunctional amine component, a composite semipermeable membrane having excellent oxidant resistance (chlorine resistance) can be obtained.

Since the skin layer is a very thin membrane, it is very difficult to specify the thickness, and therefore, a relationship between the thickness of the skin layer and the water separating performance of the composite semipermeable membrane has not been studied. This time, the present inventor has adopted as an index an absorption peak intensity obtained by a transmission method of FT-IR (Fourier transform infrared spectroscopy) and derived from a C=O stretching vibration of an amide group of a polyamide-based resin which is a material for forming the skin layer, instead of the thickness of the skin layer, and has found that there is a correlation between the absorption peak intensity and the salt rejection rate of the composite semipermeable membrane. It has been further found that the composite semipermeable membrane having the skin layer having an absorption peak intensity of 0.06 or more has a much higher salt rejection property than conventional composite semipermeable membranes. The absorption peak intensity of a skin layer of the conventional composite semipermeable membrane is about 0.01 to 0.02.

The absorption peak intensity is preferably 0.1 or less from the viewpoint of ensuring practical water permeability.

The alicyclic diamine consists of piperazine, from the viewpoint of excellent oxidant resistance (chlorine resistance).

The polyamide-based resin is preferably chlorinated at a chlorination ratio of 0.1 to 7% from the viewpoint of improving the salt rejection property.

The polyfunctional acid halide component is preferably trimesic acid trichloride from the viewpoint of improving the salt rejection property.

Further, the present invention relates to a method for producing a composite semipermeable membrane, comprising a step in which an amine solution containing a polyfunctional amine component and an organic solution containing a polyfunctional acid halide component are brought into contact on a porous support to form a skin layer containing a polyamide-based resin on a surface of the porous support, wherein
the polyfunctional amine component contains an alicyclic diamine, and
the amine solution contains the polyfunctional amine component in an amount of 7% by weight or more.

According to the production method of the present invention, a composite semipermeable membrane having the skin layer having an absorption peak intensity of 0.06 or more can be produced.

### EFFECT OF THE INVENTION

The skin layer of the composite semipermeable membrane of the present invention is formed using an alicyclic diamine as a polyfunctional amine component, and, in addition, the absorption peak intensity is 0.06 or more.

Therefore, the composite semipermeable membrane of the present invention not only is excellent in oxidant resistance (chlorine resistance), but also has a much higher salt rejection property than conventional composite semipermeable membranes. When the composite semipermeable membrane of the present invention is used, the water permeation capacity hardly fluctuates even when washing is repeated with a solution containing an oxidizing agent, so that operation of water treatment is facilitated.

### MODE FOR CARRYING OUT THE INVENTION

Hereinafter, embodiments of the present invention will be described. In the composite semipermeable membrane of the present invention, a skin layer containing a polyamide-based resin is formed on the surface of a porous support, and in the skin layer, an absorption peak intensity obtained by a transmission method of FT-IR (Fourier transform infrared spectroscopy) and derived from a C=O stretching vibration of an amide group is 0.06 or more.

The polyamide-based resin is obtained by polymerizing a polyfunctional amine component and a polyfunctional acid halide component.

Alicycclic diamines are known as the polyfunctional amine component. Examples (not according with invention) thereof include diaminocyclohexane such as 1,3-diaminocyclohexane, 1,2-diaminocyclohexane, and piperazine substituted with an alkyl group having 1 to 2 carbon atoms (such as 2-methylpiperazine, 2-ethylpiperazine, 2,5-dimethylpiperazine, and 2,5-diethylpiperazine), 4-aminomethylpiperazine, and heteroalicyclic diamine in which a hetero atom constituting each ring of compounds represented by the following structural formulas (1) to (3) is nitrogen. These may be used alone or in combination of two or more. In the invention, the polyfunctional amine component consists of piperazine. piperazine. 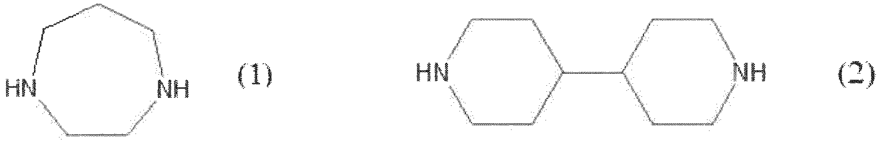 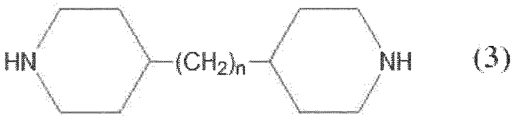 (In the above structural formula (3), n is an integer of 1 to 3. In the structural formulas (1) to (3), hydrogen bonded to a carbon atom constituting the ring may be substituted with an alkyl group having 1 to 2 carbon atoms.)

Aromatic polyfunctional amines and aliphatic polyfunctional amines are also known as the polyfunctional amines (not according to the invention).

The aromatic polyfunctional amines include, for example, m-phenylenediamine, p-phenylenediamine, o-phenylenediamine, 1,3,5-triamino benzene, 1,2,4-triamino benzene, 3,5-diaminobenzoic acid, 2,4-diaminotoluene, 2,6-diaminotoluene, N,N'-dimethyl-m-phenylenediamine, 2,4-diaminoanisole, amidol, xylylene diamine etc. These polyfunctional amines may be used independently, and two or more kinds may be used in combination.

The aliphatic polyfunctional amines include, for example, ethylenediamine, propylenediamine, tris(2-aminoethyl)amine, N-phenyl-ethylenediamine, etc. These polyfunctional amines may be used independently, and two or more kinds may be used in combination.

In the case where the alicyclic diamine and the aromatic or aliphatic polyfunctional amine are used in combination, which is not according to the invention,

it is preferable to use the alicyclic diamine in an amount of 85% by weight or more, more preferably 90% by weight or more, even more preferably 95% by weight or more, relative to the total amount of the polyfunctional amine components.

The polyfunctional acid halide component represents polyfunctional acid halides having two or more reactive carbonyl groups.

The polyfunctional acid halides include aromatic, aliphatic, and alicyclic polyfunctional acid halides.

The aromatic polyfunctional acid halides include, for example trimesic acid trichloride, terephthalic acid dichloride, isophthalic acid dichloride, biphenyl dicarboxylic acid dichloride, naphthalene dicarboxylic acid dichloride, benzenetrisulfonic acid trichloride, benzenedisulfonic acid dichloride, chlorosulfonyl benzenedicarboxylic acid dichloride etc.

The aliphatic polyfunctional acid halides include, for example, propanedicarboxylic acid dichloride, butane dicarboxylic acid dichloride, pentanedicarboxylic acid dichloride, propane tricarboxylic acid trichloride, butane tricarboxylic acid trichloride, pentane tricarboxylic acid trichloride, glutaryl halide, adipoyl halide etc.

The alicyclic polyfunctional acid halides include, for example, cyclopropane tricarboxylic acid trichloride, cyclobutanetetracarboxylic acid tetrachloride, cyclopentane tricarboxylic acid trichloride, cyclopentanetetracarboxylic acid tetrachloride, cyclohexanetricarboxylic acid trichloride, tetrahydrofurantetracarboxylic acid tetrachloride, cyclopentanedicarboxylic acid dichloride, cyclobutanedicarboxylic acid dichloride, cyclohexanedicarboxylic acid dichloride, tetrahydrofuran dicarboxylic acid dichloride, etc.

These polyfunctional acid halides may be used independently, and two or more kinds may be used in combination. In order to obtain a skin layer having higher salt-blocking property, it is preferred to use aromatic polyfunctional acid halides. In addition, it is preferred to form a cross linked structure using polyfunctional acid halides having trivalency or more as at least a part of the polyfunctional acid halide components. From the viewpoint of these, trimesic acid trichloride is especially preferable.

Furthermore, in order to improve performance of the skin layer including the polyamide resin, polymers such as polyvinyl alcohol, polyvinylpyrrolidone, and polyacrylic acids etc., and polyhydric alcohols, such as sorbitol and glycerin, may be copolymerized.

The porous support for supporting the skin layer is not especially limited as long as it has a function for supporting the skin layer. Materials for formation of the porous support include various materials, for example, polyarylether sulfones, such as polysulfones and polyether sulfones; polyimides; polyvinylidene fluorides; etc., and polysulfones and polyarylether sulfones are especially preferably used from a viewpoint of chemical, mechanical, and thermal stability. The thickness of this porous support is usually approximately 25 to 125 µm, and preferably approximately 40 to 75 µm, but the thickness is not necessarily limited to them. The porous support may be reinforced with backing by cloths, nonwoven fabric, etc.

The porous support may have a symmetrical structure or an asymmetrical structure. However, the asymmetrical structure is preferred from the viewpoint of satisfying both of supporting function and liquid permeability of the skin layer. The average pore diameter of the skin layer formed side of the porous support is preferably from 0.01 to 0.5 µm.

Further, an epoxy resin porous sheet may be used as the porous support. The average pore diameter of the epoxy resin porous sheet is preferably from 0.01 to 0.4 µm.

Processes for forming the skin layer including the polyamide resin on the surface of the porous support is not in particular limited, and any publicly known methods may be used. For example, the publicly known methods include an interfacial condensation method, a phase separation method, a thin film application method, etc. The interfacial condensation method is a method, wherein an amine aqueous solution containing a polyfunctional amine component, an organic solution containing a polyfunctional acid halide component are forced to contact together to form a skin layer by an interfacial polymerization, and then the obtained skin layer is laid on a porous support, and a method wherein a skin layer of a polyamide resin is directly formed on a porous support by the above-described interfacial polymerization on a porous support. Details, such as conditions of the interfacial condensation method, are described in Japanese Patent Application Laid-Open No. S58-24303, Japanese Patent Application Laid-Open No. H01-180208, and these known methods are suitably employable.

In the present invention, it is preferred to form a skin layer by an interfacial polymerization method including forming a coating layer of an amine solution containing the alicyclic diamine on a porous support and bringing an organic solution containing a polyfunctional acid halide component into contact with the coating layer of the amine solution.

As the solvent for the amine solution, there are exemplified water, alcohols such as ethylene glycol, isopropyl alcohol, and ethanol, and a mixed solvent of these alcohols with water.

In the interfacial polymerization method, the concentration of the polyfunctional amine component in the amine solution is 7% by weight or more, and even more preferably 9% by weight or more. When the concentration of the polyfunctional amine component is less than 3% by weight, the skin layer having an absorption peak intensity of 0.03 or more cannot be formed. On the other hand, if the concentration of the polyfunctional amine component in the amine solution is too high, the absorption peak intensity of the obtained skin layer becomes too large, and there are tendencies that the permeation resistance increases and the water permeability decreases. Thus, the concentration of the polyfunctional amine component is preferably 11% by weight or less, more preferably 10% by weight or less.

The concentration of the polyfunctional acid halide component in the organic solution is not particularly limited, but is preferably 0.1 to 5% by weight, more preferably 0.1 to 3% by weight, and even more preferably 0.1 to 2% by weight. When the concentration of the polyfunctional acid halide component is less than 0.1% by weight, the skin layer having an absorption peak intensity of 0.03 or more is hardly formed. On the other hand, when the concentration of the polyfunctional acid halide component exceeds 5% by weight, the unreacted polyfunctional acid halide component tends to remain, or the absorption peak intensity of the obtained skin layer becomes too large, and there are tendencies that the permeation resistance increases and the water permeability decreases.

An organic solvent used in the organic solution is not particularly limited as long as it has low solubility in water, does not deteriorate the porous support, and dissolves the polyfunctional acid halide component, and examples thereof include saturated hydrocarbons such as cyclohexane, heptane, octane and nonane, and halogen-substituted hydrocarbons such as 1,1,2-trichlorotrifluoroethane. The organic solvent is a saturated hydrocarbon, a naphthenic solvent or an isoparaffinic solvent having a boiling point of preferably 300°C or lower and more preferably 200°C or lower. These organic solvents may be used alone, or as a mixed solvent of two or more kinds of solvents.

Various kinds of additives may be added to the amine solution or the organic solution in order to provide easy film production and to improve performance of the composite semipermeable membrane to be obtained. The additives include, for example, surfactants, such as sodium dodecylbenzenesulfonate, sodium dodecyl sulfate, and sodium lauryl sulfate; basic compounds, such as sodium hydroxide, trisodium phosphate, triethylamine, etc. for removing hydrogen halides formed by polymerization; acylation catalysts; compounds having a solubility parameter of 8 to 14 (cal/cm³)^{1/2} described in Japanese Patent Application Laid-Open No. H08-224452.

In the present invention, after the contact with the coating layer of amine solution and the organic solution, it is preferred to remove the excessive organic solution on the porous support, and to dry the formed membrane on the porous support by heating at a temperature of 70°C or more, forming the skin layer. Heat-treatment of the formed membrane can improve the mechanical strength, heat-resisting property, etc. The heating temperature is more preferably 70 to 200°C, and especially preferably 100 to 150°C. The heating period of time is preferably approximately 30 seconds to 10 minutes, and more preferably approximately 40 seconds to 7 minutes.

In the obtained skin layer, the absorption peak intensity obtained by the transmission method of FT-IR (Fourier transform infrared spectroscopy) and derived from the C=O stretching vibration of the amide group is 0.06 or more. The absorption peak intensity is preferably 0.1 or less and more preferably 0.09 or less from the viewpoint of ensuring practical water permeability.

In the present invention, it is preferable to chlorinate the polyamide-based resin in the skin layer in order to improve the salt rejection property.

A reagent used for the chlorination treatment is not particularly limited, and examples thereof include chlorine gas, bleaching powder, alkali metal hypochlorite such as sodium hypochlorite, chlorine dioxide, chloramine B, chloramine T, halazone, dichlorodimethylhydantoin, chlorinated isocyanuric acid, and salts thereof. It is preferable to use an aqueous solution of sodium hypochlorite having a pH of 1 to 10 from the viewpoint of ease of chlorination of the polyamide-based resin and handleability.

The method of the chlorination treatment is not particularly limited, and examples thereof include a method of immersing the skin layer in a treatment liquid, a method of applying or spraying the treatment liquid on the skin layer, and a method of passing the treatment liquid under pressure through the skin layer. Among these methods, the method of passing the treatment liquid under pressure through the skin layer is preferable. When an aqueous solution of sodium hypochlorite is used as the treatment liquid, the concentration of the aqueous solution of sodium hypochlorite is about 5 to 100 ppm (preferably 5 to 40 ppm), and the operation pressure when the treatment liquid is passed under pressure is about 0.5 to 2.0 MPa.

By the chlorination treatment, the polyamide-based resin in the skin layer is chlorinated at a chlorination ratio of preferably 0.1 to 7%, more preferably 0.5 to 4.0%, and even more preferably 1.0 to 3.0%. If the chlorination ratio is less than 0.1%, the effect of improving the salt rejection property by the chlorination treatment cannot be sufficiently obtained. On the other hand, when the chlorination ratio exceeds 7%, the salt rejection rate tends to decrease.

Further, conventionally known various treatments may be applied to the composite semipermeable membrane so as to improve its salt rejection property, water permeability, and oxidant resistance. Further, the composite semipermeable membrane may be of a dry type from the viewpoint of excellent processability and storage stability.

There is no limitation on the shape of the composite semipermeable membrane of the present invention. That is, the composite semipermeable membrane can take any conceivable membrane shapes, such as a flat membrane or a spiral element.

### EXAMPLE

The present invention will, hereinafter, be described with reference to Examples, but the present invention is not limited at all by these Examples.

### [Evaluation and measuring method]

### (Measurement of permeation flux and salt rejection rate)

The prepared flat shape composite semipermeable membrane was cut into a predetermined shape and size, and was set to a cell for flat shape evaluation. An aqueous solution containing 1500 mg/L NaCl and being adjusted to pH 6.5 to 7 with NaOH was allowed to contact to a supply side and permeation side of the membrane at a differential pressure of 1.5 MPa at 25°C for 30 minutes. A permeation velocity and electric conductivity of the permeated water obtained by this operation were measured, and a permeation flux (m³/m²·d) and the salt rejection rate (%) were calculated. The correlation (calibration curve) of the NaCl concentration and electric conductivity of the aqueous solution was made beforehand, and the salt rejection rate was calculated by the following equation. Salt rejection rate (%) = {1-(NaCl concentration in permeated liquid [mg/L])/(NaCl concentration in supply solution) [mg/L]} × 100

### (Measurement of absorption peak intensity derived from C=O stretching vibration of amide group)

The prepared composite semipermeable membrane was immersed in cyclohexanone to dissolve a porous polysulfone support, and a skin layer containing a polyamide-based resin was isolated. When the skin layer is isolated, a resin such as polyvinyl alcohol may be applied to the skin layer surface in advance to reinforce the skin layer in order to prevent the skin layer from cracking and tearing. The isolated skin layer was washed three times with cyclohexanone and once with ethanol. Thereafter, the skin layer was stacked on a PET film (thickness: about 180 µm) so as to cover a hole with a diameter of 1 cm provided in the PET film with the skin layer, and the skin layer was dried at room temperature for 30 minutes to prepare a measurement sample. Then, the measurement sample was attached to a Fourier transform infrared spectrophotometer (Spectrum TWO, manufactured by PerkinElmer Co., Ltd.) and scanned in a range of 700 to 4000 cm⁻¹ by the transmission method of FT-IR (Fourier transform infrared spectroscopy), and the absorption peak intensity (around 1620 cm⁻¹) derived from the C=O stretching vibration of the amide group of the polyamide-based resin which is a material for forming the skin layer was measured (16 scans).

### (Measurement of chlorination ratio)

An element ratio of the prepared composite semipermeable membrane was analyzed with an X-ray photoelectron spectroscopy analyzer (manufactured by Shimadzu Corporation, ESCA-3200), and the chlorination ratio was calculated by the following equation using the obtained element ratio (atm%). Chlorination ratio (%) = {(Cl element ratio-Na element ratio)/(N element ratio/2)} × 100

### Example 1

An aqueous amine solution containing 7% by weight of piperazine, 0.15% by weight of sodium dodecyl sulfate, 1.48% by weight of sodium hydroxide, and 6% by weight of camphorsulfonic acid was applied onto a porous polysulfone support (asymmetric membrane). Then, an excess aqueous amine solution was removed to form an aqueous solution coating layer. Next, the surface of the aqueous solution coating layer was immersed for 10 seconds in an acid chloride solution prepared by dissolving 0.42% by weight of trimesic acid trichloride (TMC) in an isoparaffinic solvent (IP1016, manufactured by Idemitsu Kosan Co., Ltd.). Then, after removal of the excess solution on the surface of the aqueous solution coating layer, the coating layer was air-dried for 60 seconds and further held in a hot air dryer of 120°C for 3 minutes to form a skin layer containing a polyamide-based resin on the porous polysulfone support, thereby to prepare a composite semipermeable membrane.

### Example 2

The composite semipermeable membrane prepared in Example 1 was set to a cell for flat shape evaluation, and an aqueous solution having a pH of 7.5 and containing 20 ppm of sodium hypochlorite was allowed to contact to a supply side and permeation side of the composite semipermeable membrane at a differential pressure of 1.5 MPa for 30 minutes, and thus to chlorinate the polyamide-based resin in the skin layer.

### Example 3 (not according with invention)

A composite semipermeable membrane was prepared in the same manner as in Example 2, except that the concentration of piperazine in the aqueous amine solution was changed to 3% by weight.

### Example 4

A composite semipermeable membrane was prepared in the same manner as in Example 2, except that the concentration of piperazine in the aqueous amine solution was changed to 9% by weight.

### Example 5

A composite semipermeable membrane was prepared in the same manner as in Example 2, except that the concentration of sodium hypochlorite was changed to 80 ppm.

### Comparative Example 1

A composite semipermeable membrane was prepared in the same manner as in Example 2, except that the concentration of piperazine in the aqueous amine solution was changed to 1.5% by weight.

### Comparative Example 2

A composite semipermeable membrane was prepared in the same manner as in Example 1, except that the concentration of piperazine in the aqueous amine solution was changed to 1.5% by weight. Then, the prepared composite semipermeable membrane was immersed in an aqueous solution having a pH of 7.5 and containing 700 ppm of sodium hypochlorite at normal pressure for 5 minutes to chlorinate the polyamide-based resin in the skin layer.

**[Table 1]**

| | PIPERAZINE CONCENTRATION (wt%) | ABSORPTION PEAK INTENSITY | CHLORINATION RATIO (%) | SALT REJECTION RATE (%) | PERMEATION FLUX (m³/m²·d) |
|---|---|---|---|---|---|
| Example 1 | 7 | 0.06 | 0 | 91.3 | 1.26 |
| Example 2 | 7 | 0.06 | 2 | 96.0 | 0.90 |
| Example 3 | 3 | 0.03 | 2 | 95.4 | 1.11 |
| EXAMPLE 4 | 9 | 0.08 | 2 | 96.0 | 0.70 |
| Example 5 | 7 | 0.06 | 7 | 94.5 | 1.05 |
| COMPARATIVE EXAMPLE 1 | 1.5 | 0.02 | 2 | 84.8 | 3.05 |
| COMPARATIVE EXAMPLE 2 | 1.5 | 0.02 | 8 | 70.0 | 3.60 |

### INDUSTRIAL APPLICABILITY

The composite semipermeable membrane of the present invention is suitably used for production of ultrapure water, desalination of brackish water or sea water, etc., and usable for removing or collecting pollution sources or effective substances from pollution, which causes environment pollution occurrence, such as dyeing drainage and electrodeposition paint drainage, leading to contribute to closed system for drainage. Furthermore, the membrane can be used for concentration of active ingredients in foodstuffs usage, for an advanced water treatment, such as removal of harmful component in water purification and sewage usage etc. Moreover, the membrane can be used for waste water treatment in oil fields or shale gas fields.

## Claims

1. A composite semipermeable membrane wherein a skin layer containing a polyamide-based resin obtained by polymerizing a polyfunctional amine component and a polyfunctional acid halide component is formed on a surface of a porous support, wherein
the polyfunctional amine component consists of piperazine, and
in the skin layer, an absorption peak intensity obtained by a transmission method of FT-IR (Fourier transform infrared spectroscopy) and derived from a C=O stretching vibration of an amide group is 0.06 or more, wherein
the absorption peak intensity derived from C=O stretching vibration of an amide group is measured according to the method disclosed in the description.

2. The composite semipermeable membrane according to claim 1, wherein the absorption peak intensity is 0.1 or less.

3. The composite semipermeable membrane according to claim 1 or 2, wherein the polyamide-based resin is chlorinated at a chlorination ratio of 0.1 to 7%, wherein
the chlorination ratio is calculated by the following equation using an element ratio (atm%) obtained by analyzing the composite semipermeable membrane with an X-ray photoelectron spectroscopy analyzer: Chlorination ratio (%) = {(Cl element ratio-Na element ratio)/(N element ratio/2)} × 100.

4. The composite semipermeable membrane according to any one of claims 1 to 3, wherein the polyfunctional acid halide component is trimesic acid trichloride.

5. A method for producing a composite semipermeable membrane, according to claims 1-4, comprising a step in which an amine solution containing a polyfunctional amine component and an organic solution containing a polyfunctional acid halide component are brought into contact on a porous support to form a skin layer containing a polyamide-based resin on a surface of the porous support, wherein
the polyfunctional amine component consists of piperazine, and
the amine solution contains the polyfunctional amine component in an amount of 7% by weight or more.

## Patentansprüche

1. Semipermeable Verbundmembran, wobei eine Hautschicht, die ein Polyamidbasiertes Harz enthält, erhalten durch Polymerisieren einer polyfunktionellen Aminkomponente und einer polyfunktionellen Säurehalogenidkomponente, auf einer Oberfläche eines porösen Trägers gebildet ist, wobei
die polyfunktionelle Aminkomponente aus Piperazin besteht, und
in der Hautschicht eine Absorptionspeakintensität, erhalten durch ein Transmissionsverfahren der FT-IR (Fourier-Transformations-Infrarotspektroskopie) und abgeleitet von einer C=O-Streckschwingung einer Amidgruppe, 0,06 oder mehr beträgt, wobei
die Absorptionspeakintensität abgeleitet von einer C=O-Streckschwingung einer Amidgruppe gemäß dem in der Beschreibung offenbarten Verfahren gemessen wird.

2. Semipermeable Verbundmembran nach Anspruch 1, wobei die Absorptionspeakintensität 0,1 oder weniger beträgt.

3. Semipermeable Verbundmembran nach Anspruch 1 oder 2, wobei das Polyamidbasierte Harz mit einem Chlorierungsverhältnis von 0,1 bis 7% chloriert ist, wobei
das Chlorierungsverhältnis mit der folgenden Gleichung unter Verwendung eines Elementverhältnisses (atm%), erhalten durch Analysieren der semipermeablen Verbundmembran mit einem Röntgen-Photoelektronenspektroskopie-Analysator, berechnet wird: Chlorierungsverhältnis (%) = {(Cl-Elementverhältnis - Na-Elementverhältnis)/(N-Elementverhältnis/2)} × 100.

4. Semipermeable Verbundmembran nach einem der Ansprüche 1 bis 3, wobei die polyfunktionelle Säurehalogenidkomponente Trimesinsäuretrichlorid ist.

5. Verfahren zur Herstellung einer semipermeablen Verbundmembran nach einem der Ansprüche 1 bis 4, umfassend einen Schritt, in welchem eine Aminlösung, enthaltend eine polyfunktionelle Aminkomponente und eine organische Lösung, enthaltend eine polyfunktionelle Säurehalogenidkomponente, auf einem porösen Träger in Kontakt gebracht werden, um eine Hautschicht, enthaltend ein Polyamidbasiertes Harz, auf einer Oberfläche des porösen Trägers zu bilden, wobei
die polyfunktionelle Aminkomponente aus Piperazin besteht, und
die Aminlösung die polyfunktionelle Aminkomponente in einer Menge von 7 Gew.-% oder mehr enthält.

## Revendications

1. Membrane semi-perméable composite, dans laquelle une couche de peau contenant une résine à base de polyamide obtenue par polymérisation d'un composant amine polyfonctionnel et d'un composant halogénure d'acide polyfonctionnel est formée sur une surface d'un support poreux, dans laquelle
le composant amine polyfonctionnel comprend de la pipérazine, et
dans la couche de peau, une intensité de pic d'absorption obtenue par un procédé de transmission de FT-IR (spectroscopie infrarouge à transformée de Fourier) et dérivée d'une vibration d'étirement C=O d'un groupe amide est supérieure ou égale à 0,06, dans laquelle
l'intensité de pic d'absorption dérivée de la vibration d'étirement C=O d'un groupe amide est mesurée selon le procédé divulgué dans la description.

2. Membrane semi-perméable composite selon la revendication 1, dans laquelle l'intensité de pic d'absorption est inférieure ou égale à de 0,1.

3. Membrane semi-perméable composite selon la revendication 1 ou 2,
dans laquelle la résine à base de polyamide est chlorée selon un rapport de chloration de 0,1 à 7 %, dans laquelle
le rapport de chloration est calculé par l'équation suivante à l'aide d'un rapport d'éléments (% atm) obtenu en analysant la membrane semi-perméable composite avec un analyseur de spectroscopie photoélectronique à rayons X : taux de chloration (%) = {(rapport d'élément Cl-rapport d'élément Na)/(rapport d'élément N/2)} × 100.

4. Membrane semi-perméable composite selon l'une quelconque des revendications 1 à 3, dans laquelle le composant halogénure d'acide polyfonctionnel est le trichlorure d'acide trimésique.

5. Procédé de production d'une membrane semi-perméable composite selon les revendications 1 - 4, comprenant une étape dans laquelle une solution d'amine contenant un composant amine polyfonctionnel et une solution organique contenant un composant halogénure d'acide polyfonctionnel sont mises en contact sur un support poreux pour former une couche de peau contenant une résine à base de polyamide sur une surface du support poreux, dans lequel
le composant amine polyfonctionnel comprend de la pipérazine, et
la solution d'amine contient le composant amine polyfonctionnel en une quantité supérieure ou égale à 7 % en poids.
